# EUROPEAN PATENT APPLICATION

(11) **EP 4 783 042 A1**
(43) Date of publication of application: **29.07.2026**
(21) Application number: 23953095.9
(22) Date of filing: 22.09.2023
(51) Int. Cl.: G06F 21/32

(54) **INFORMATION PROCESSING DEVICE**

(71) Applicant: Pioneer Corporation, Tokyo 113-0021 (JP)
(72) Inventor: IMAEDA, Yoichi, Tokyo 113-0021 (JP); FUJITA, Yasufumi, Kawagoe-shi, Saitama 350-8555 (JP)
(74) Representative: Grünecker Patent- und Rechtsanwälte PartG mbB
(86) International application number: PCT/JP2023/034469
(87) International publication number: WO 2025/062613

(57) **Abstract**

It is provided to identify a person by a biometric authentication. It is provided to use a near field wireless communication to acquire, from a storage medium storing identification information for identifying a plurality of persons and biometric information of the plurality of persons, the identified information and the biometric information, acquire biometric information of target person, and identify the identification information of the target person based on the biometric information of the plurality of persons acquired from the storage medium and the biometric information of the target person.

## Description

### [TECHNICAL FIELD]

The present disclosure relates to an information processing device.

### [BACKGROUND ART]

When managing an object used by a plurality of persons, there is a case in which it is necessary to identify which among the plurality of persons is using the object. For example, when managing a vehicle used by a plurality of persons and an operation of the vehicle, an identification regarding which among the plurality of persons is driving the vehicle is performed (see Patent Document 1)

### [CITATION LIST]

### [Patent Documents]

[Patent Document 1] JP 2018-45335A

### [SUMMARY OF THE INVENTION]

### [Technical Problem]

When identifying the person who drives the vehicle, it is becoming more common to use a biometric authentication such as a facial authentication and the like. Generally, when performing the biometric authentication, biometric information for the biometric authentication is stored in the cloud. Therefore, conventionally, in a case when the vehicle is at a location with a poor communication environment, it is difficult to perform the communication with the cloud and it is unable to perform the biometric authentication.

Accordingly, a technical problem to be solved by the present invention is described as an example to identify a person by the biometric authentication.

### [Solution to Problem]

In order to solve the above-identified technical problem, an invention according to claim 1 includes an identification information acquisition processing portion which acquires, from a storage medium storing identification information for identifying a plurality of persons and biometric information of the plurality of persons, the identification information and the biometric information by using a near field wireless communication; a biometric information acquisition processing portion which acquires biometric information of a target person; and an identification information specification portion which specifies identification information of the target person based on the biometric information of the plurality of persons acquired from the storage medium and the biometric information of the target person.

An invention according to claim 5 is an onboard apparatus arranged in a mobile object including the above-described information processing device, and a camera arranged at a position being able to capture the face of the person seated in the driver's seat of the mobile object.

An invention according to claim 7 is an onboard apparatus arranged in a mobile object including the above-described information processing device, and a microphone arranged at a position being able to pick up the voice of the person seated in a driver's seat of the mobile object.

An invention according to claim 9 includes the above-described information processing device, and a steering wheel, wherein the steering wheel includes a finger information acquisition device which acquires information regarding fingers of the person holding the steering wheel.

An invention according to claim 13 is a storage medium performing near field wireless communication with an information processing device, wherein the storage medium stores identification information for identifying a plurality of persons and biometric information of the plurality of persons.

An invention according to claim 14 is a system comprising a storage medium and an information processing device, wherein the storage medium stores identification information for identifying a plurality of persons and biometric information of the plurality of persons, the information processing device includes an identification information acquisition processing portion which acquires the identification information and the biometric information from the storage medium by using near field wireless communication; a biometric information acquisition processing portion which acquires biometric information of a target person; and an identification information specification portion which specifies the identification information of the target person based on the biometric information of the plurality of persons acquired from the storage medium and the biometric information of the target person.

An invention according to claim 15 is an information processing method executed by a computer, including an identification information acquisition processing step of acquiring, from a storage medium storing identification information for identifying a plurality of persons and biometric information of the plurality of persons, the identification information and the biometric information by using the near field wireless communication; a biometric information acquisition processing step of acquiring biometric information of a target person, and an identification information specification step of specifying the identification information of the target person based on the biometric information of the plurality of persons acquired from the storage medium and the biometric information of the target person.

An invention according to claim 16 is an information processing program for making a computer to execute the information processing method according to claim 15.

An invention according to claim 17 stores the information processing program according to claim 16.

### [BRIEF DESCRIPTION OF THE DRAWINGS]

Fig. 1 is a view showing an information processing system according to an embodiment of the present invention.
Fig. 2 is a view showing a control portion 210.
Fig. 3 is a view showing an example of a processing operation performed in the control portion 210 when it is possible to perform near field wireless communication with a storage medium 100.
Fig. 4 is a view showing an onboard apparatus (an authentication device 200) according to an embodiment of the present invention.
Fig. 5 is a view showing a mobile object (an authentication device 200) according to an embodiment of the present invention.
Fig. 6 is a view showing another example of the control portion 210.

### [DESCRIPTION OF EMBODIMENTS]

An information processing device according to an embodiment of the present invention includes an identification information acquisition processing portion which uses a near field wireless communication to acquire, from a storage medium storing identification information for identifying a plurality of persons and biometric information of the plurality of persons, the identification information and the biometric information, a biometric information acquisition processing portion which acquires the biometric information of a target person, and an identification information specification portion which specifies the identification information of the target person based on the biometric information of the plurality of persons acquired from the storage medium and the biometric information of the target person. Accordingly, in the present embodiment, even in a case in which an authentication device is at a location where is distant from the cloud or the like and with a poor communication environment with the device, it is possible to specify the person by the biometric authentication.

The plurality of persons may be set as the persons using the target object. In this manner, it is possible to specify the person using the target object.

The target object may be a mobile object, and the target person may be a driver of the mobile object. In this manner, it is possible to specify the person using the mobile object.

The biometric information acquired by the biometric information acquisition processing portion may include the information regarding the face of the person seated in the driver's seat of the vehicle, and the biometric information stored in the storage medium may include the information regarding the faces of the plurality of persons. The onboard apparatus according to an embodiment of the present invention is configured in this manner so as to be able to perform the specification of the driver of the mobile object.

The onboard apparatus according to an embodiment of the present invention is an onboard apparatus mounted on the mobile object, and includes the above-described information processing device and a camera mounted at a position capable of capturing an image of a face of the person seated in the driver's seat of the mobile object. Accordingly, in the present embodiment, it is possible to specify the driver of the mobile object.

The biometric information acquired by the biometric information acquisition processing portion may be information regarding the voice of the person seated in the driver's seat of the mobile object, and the biometric information stored in the storage medium may be information regarding the voice of the plurality of persons. In this manner, it is possible to specify the driver of the mobile object.

The onboard apparatus according to an embodiment of the present invention is an onboard apparatus mounted on the mobile object, and includes the above-described information processing device and a microphone mounted at a position capable of picking up the voice of a person seated in the driver's seat of the mobile object. Accordingly, in the present embodiment, it is possible to specify the driver of the mobile object.

The biometric information acquired by the biometric information acquisition processing portion may be information regarding fingers of the person holding a steering wheel of the mobile object, and the biometric information stored in the storage medium may include information regarding the fingers of the plurality of persons. In this manner, it is possible to specify the driver of the mobile object.

The mobile object according to an embodiment of the present invention includes the above-described information processing device and a steering wheel, wherein the steering wheel includes a finger information acquisition device which acquires information regarding the finger of the person holding this steering wheel. Accordingly, in the present embodiment, it is possible to specify the driver of the mobile object.

The above-described information processing device may be configured to include a driving data acquisition processing portion which acquires driving data of the mobile object, and an association processing portion which associates the driving data acquired by the driving data acquisition processing portion with the identification information specified by the identification information specification portion. In this manner, it is possible to manage the driving data of the mobile object per each driver of the mobile object.

The biometric information acquired by the biometric information acquisition processing portion may include information regarding the face, the fingers, and/or the voice of a target person, and the biometric information stored in the storage medium may include the information regarding the face, the fingers, and/or the voice of a plurality of persons. In this manner, as a biometric authentication technology, for example, it is possible to adopt the facial authentication technology (the authentication technology that uses information such as the position of the eyes and other features, and the outline of the face), the auricle (an ear shape) authentication technology (the authentication technology that uses the shape of the ear), the iris authentication technology (the authentication technology that uses the iris pattern), the ocular blood vessel authentication technology (the authentication technology that uses the blood vessel pattern in the white of the eye), the retina authentication technology (the authentication technology that uses the retinal vein pattern), the fingerprint authentication technology (the authentication technology that uses fingerprints), the vein authentication technology (the authentication technology that uses vein patterns), and the voiceprint authentication technology (the authentication technology that uses voiceprints).

The identification information of the target person that is specified by the identification information specification portion may be stored by being associated with the usage of the target object of the target person. In this manner, it is possible to manage the usage of the target object.

The storage medium according to an embodiment of the present invention is a storage medium that performs the near field wireless communication with the information processing device, which stores the identification information for identifying the plurality of persons, and the biometric information of the plurality of persons. Accordingly, in the present embodiment, it is possible for the authentication device to acquire the biometric information of the plurality of persons using the target object by the near field wireless communication.

A system according to an embodiment of the present invention is a system including a storage medium and an information processing device, wherein the storage medium stores identification information for identifying a plurality of persons, and biometric information of the plurality of persons, and the information processing device includes an identification information acquisition processing portion which acquires the identification information and the biometric information from the storage medium by using the near field wireless communication, a biometric information acquisition processing portion which acquires biometric information of a target person, and an identification information specification portion which specifies the identification information of the target person based on the biometric information of the plurality of persons acquired from the storage medium and the biometric information of the target person. Accordingly, in the present embodiment, even in a case in which the authentication device is at the location where is distant from the cloud or the like and with the poor communication environment with the device, it is possible to specify the person by the biometric authentication.

An information processing method according to an embodiment of the present invention is an information processing method executed by a computer, and includes an identification information acquisition processing step of acquiring, from a storage medium storing identification information for identifying a plurality of persons and biometric information of the plurality of persons, the identification information and the biometric information by using the near field wireless communication, a biometric information acquisition processing step of acquiring biometric information of a target person, and an identification information specification step of specifying the identification of the target person based on the biometric information of the plurality of persons acquired from the storage medium and the biometric information of the target person. Accordingly, in the present embodiment, even in a case in which the authentication device is at the location where is distant from the cloud or the like and with the poor communication environment with the device, it is possible to specify the person by the biometric authentication.

Also, an information processing program according to an embodiment of the present invention makes the above-described information processing method to be executed by a computer. Accordingly, in the present embodiment, even in a case in which the authentication device is at the location where is distant from the cloud or the like and with the poor communication environment with the device, it is possible to specify the person by the biometric authentication.

Furthermore, a computer-readable storage medium according to an embodiment of the present invention stores the above-described information processing program. In this manner, it is possible for making the information processing program to be distributed as a standalone program besides incorporating the above-described program into a device, and thus making it easier to perform the version upgrade and the like.

### (Examples)

### <Information processing system>

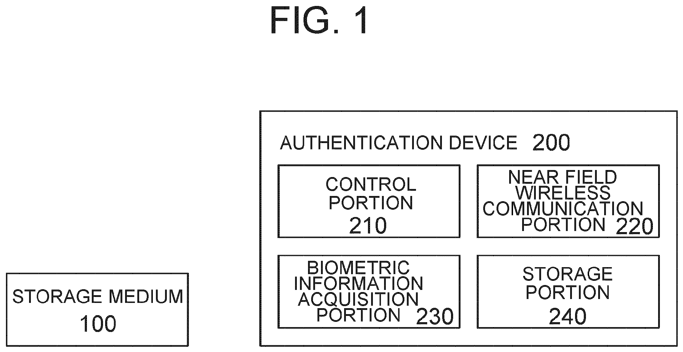

Fig. 1 is a view showing an information processing system according to an embodiment of the present invention. The information processing system according to the present embodiment includes a storage medium 100 and an authentication device 200. The information processing system according to the present embodiment is a system configured to perform an authentication for an authentication target object used by a plurality of persons (for example, a mobile object (for example, a vehicle), a residence, an office, a warehouse, a locker, a mailbox, a shared facility, and a shared equipment), and configured to specify a person (an authentication target person) who is to start using the authentication target object among a plurality of persons using the authentication target object (for example, a plurality of persons who have been pre-registered as persons using the authentication target object).

The storage medium 100 is storing identification information (for example, an identification number) for identifying the plurality of persons using the authentication target object (for example, the plurality of persons who have been pre-registered as persons using the authentication target object). That is, each of the plurality of persons using the authentication target object is assigned with the identification information, and the storage medium 100 is storing multiple identification information assigned to the plurality of persons, respectively.

The storage medium 100 is further storing the biometric information of the plurality of persons using the authentication target object. That is, the storage medium 100 is storing the identification information and the biometric information of the plurality of persons using the authentication target object. The biometric information includes, for example, information regarding the face (for example, facial images, facial features (for example, positions of the eyes and other parts, the contours of the face, the shape of the ears), eye images, eye features (for example, the iris patterns, the ocular blood vessel pattern in the white of the eye, and the retinal vein pattern)), information regarding the fingers (for example, finger images and finger features (for example, the fingerprints, the vein patterns)), and/or information regarding the voice (audio information of the voice and voice features (for example, the voiceprints).

The storage medium 100 is a portable storage medium performing the near field wireless communication (for example, the communication compliant with the near field wireless communication standard using the 13.56MHz frequency band) with the authentication device 200. For example, the storage medium 100 is an NFC (Near Field Communication) tag (for example, a key tag, and NFC tags provided in a card and a smartphone).

The authentication device 200, as shown in Fig. 1, includes a control portion 210, a near field wireless communication portion 220, a biometric information acquisition portion 230, and a storage portion 240. The authentication device 200 is, for example, provided in the authentication target object.

The control portion 210 is an information processing device for processing the information which is constituted by a computer. The near field wireless communication portion 220 is a communication device for performing a near field wireless communication, for example, it is a communication device for performing the communication compliant with the near field wireless communication standard using the 13.56MHz frequency band and for reading the information stored in an NFC tag. The biometric information acquisition portion 230 is a device for acquiring biometric information having the same type of the biometric information stored in the storage medium 100, for example, including an optical sensor (for example, a camera, an infrared sensor), a fingerprint sensor, and/or a microphone. The storage portion 240 is a storage device, such as a memory, a hard disk drive, a solid-state drive or the like, for storing the information.

Accordingly, in the present example, when a distance between the storage medium 100 and the authentication device 200 is equal to or smaller than a predetermined distance (for example, approximately 10cm), it is possible for the authentication device 200 to use the near field wireless communication to read the information stored in the storage medium 100 from the storage medium 100. Accordingly, in the present example, it is preferable to make the authentication target person to carry the storage medium 100 storing the identification information and the biometric information of the plurality of persons including the authentication target person. Then, in the present example, when the authentication target person makes this storage medium 100 to approach the authentication device 200 within the distance equal to or smaller than the predetermined distance, it is possible for the authentication device 200 to acquire the identification information and the biometric information of the plurality of persons including the authentication target person.

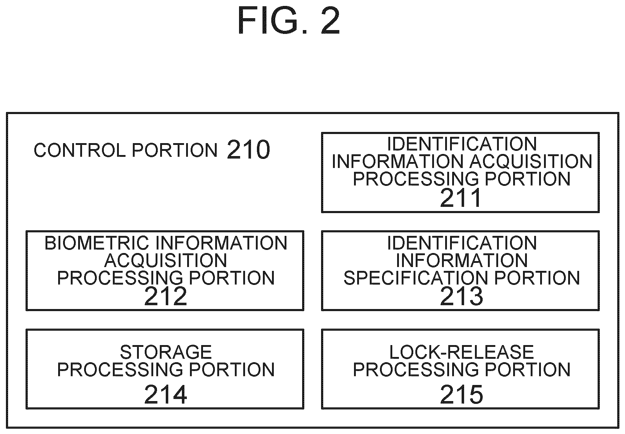

Fig. 2 is a view showing the control portion 210. The control portion 210 includes an identification information acquisition processing portion 211, a biometric acquisition processing portion 212, and an identification information specification portion 213.

The identification information acquisition processing portion 211 uses the communication by the near field wireless communication portion 220 to acquire, from the storage medium 100, the identification information and biometric information stored in the storage medium 100, that is, the identification information and biometric information of the plurality of persons using the authentication target object (for example, the plurality of persons who have been pre-registered as persons using the authentication target object).

The biometric information acquisition processing portion 212 uses the biometric information acquisition portion 230 to acquire the biometric information of the authentication target person.

The identification information specification portion 213 specifies the identification information of the authentication target person based on the biometric information of the plurality of person that are acquired from the storage medium 100 by the identification information acquisition processing portion 211 and the biometric information of the authentication target person acquired by the biometric information acquisition processing portion 212. For example, the identification information specification portion 213 extracts the biometric information that is same with the biometric information of the authentication target person acquired by the biometric information acquisition processing portion 212 from the biometric information of the plurality of persons that are acquired from the storage medium 100 by the identification information acquisition processing portion 211, and specifies the identification information corresponding to the extracted biometric information (that is, the identification information of the person corresponding to the extracted biometric information) as the identification information of the authentication target person.

In this manner, according to the present example, the biometric information of the plurality of persons using the authentication target object is stored in the storage medium 100, and the authentication device 200 acquires the biometric information of the plurality of persons from the storage medium 100. Accordingly, in the present example, even in a case in which an authentication device 200 is at a location where is distant from the cloud or the like and with a poor communication environment with the device, it is possible to specify the person by the biometric authentication.

Also, in the present example, the information of the plurality of persons using the authentication target object is stored in the portable storage medium 100 which is capable of being carried by the authentication target person rather than the authentication device 200 provided in the authentication target object. Accordingly, in the present example, even there is a change in the constitution of the plurality of persons using the authentication object, the registration of the biometric information of the changed plurality of persons using the authentication object only has to be performed with respect to the storage medium 100, and it is unnecessary to reach the authentication device 200 to perform such registration with respect to the authentication device 200.

In the present example, the biometric information of the plurality of persons using the authentication target object is stored in the storage medium 100, and the authentication device 200 acquires the biometric information of the plurality of persons from the storage medium 100. Accordingly, in the present example, it is possible for the plurality of persons using the authentication target object to use the authentication target object by receiving the storage medium 100. As a result, in the present example, it is unnecessary to prepare as many storage medium 100 as the number of the plurality of persons using the authentication target object, and it is possible to prepare the storage medium 100 with a number less than the number of the plurality of persons using the authentication target object. In this manner, in the present example, since it is possible to make the number of the storage medium 100 to be less than the number of the plurality of persons using the authentication object, it is possible to facilitate the management of the storage medium 100. Also, since fewer storage medium 100 are required such that it is possible to reduce the cost.

When the identification information specification portion 213 extracts the biometric information being same with the biometric information acquired by the biometric information acquisition processing portion 212 from the biometric information of the plurality of persons acquired by the identification information acquisition processing portion 211, the biometric authentication technology is used.

If the biometric information acquired by the identification information acquisition processing portion 211 and the biometric information acquisition processing portion 212 includes the information regarding the face, the identification information specification portion 213 uses, as the biometric authentication technology, for example, the facial authentication technology (the authentication technology that uses information such as the position of the facial parts such as the eyes, the contours of the face and the like), the auricle (ear shape) authentication technology (the authentication technology that uses the shape of the ear), the iris authentication technology (the authentication technology that uses the iris pattern), the ocular blood vessel authentication technology (the authentication technology that uses the blood vessel pattern in the white of the eye), and the retina authentication technology (the authentication technology that uses the retinal vein pattern).

If the biometric information acquired by the identification information acquisition processing portion 211 and the biometric information acquisition processing portion 212 includes the information regarding the fingers, the identification information specification portion 213 uses, as the biometric authentication technology, for example, the fingerprint authentication technology (the authentication technology that uses fingerprints) and the vein authentication technology (the authentication technology that uses the vein patterns).

If the biometric information acquired by the identification information acquisition processing portion 211 and the biometric information acquisition processing portion 212 includes the information regarding the voice, the identification information specification portion 213 uses, as the biometric authentication technology, the voiceprint authentication technology (the authentication technology that uses voiceprints).

It is preferable for the authentication device 200 to further include a storage processing portion 214. The storage processing portion 214 associates the identification information of the authentication target person that is specified by the identification information specification portion 213 with the usage of the authentication target object by the authentication target person and stores it in the storage portion 240. In this manner, it is possible to manage the usage of the authentication target object. For example, it is preferable to make the storage processing portion 214 to associate the identification information with the time when the identification information of the authentication target person is specified by the identification information specification portion 213 and store it. In this manner, it is possible to manage the starting time when the authentication target person uses the authentication target object.

The authentication target object includes a locking device, in a case of the authentication target object that is locked by the locking device before the usage of the authentication target object, it is preferable for the authentication device 200 to further include a lock-release processing portion 215. The lock-release processing portion 215 operates the locking device of the authentication target object to release the locking of the authentication target object.

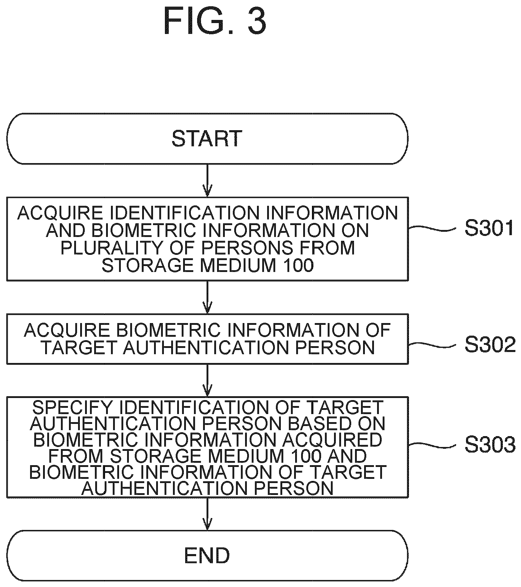

Fig. 3 is a view showing an example of the operation processing executed in the control portion 210 at the time when the near field wireless communication with the storage medium 100 becomes possible (for example, when the distance between the storage medium 100 and the near field wireless communication portion 220 is equal to or smaller than a predetermined distance). The identification information acquisition processing portion 211 acquires the identification information and the biometric information of the plurality of persons stored in the storage medium 100 from the storage medium 100 using the near field wireless communication by the near field wireless communication portion 220 (Step S301). The biometric information acquisition processing portion 212 acquires the biometric information of the authentication target person by the biometric information acquisition portion 230 (Step S302). The identification information specification portion 213 specifies the identification information of the authentication target person based on the biometric information of the plurality of persons acquired from the storage medium 100 by the identification information acquisition processing portion 211 and the biometric information of the authentication target person acquired by the biometric information acquisition processing portion 212 (Step S303).

### <Specification of the driver of the mobile object>

An information processing system according to the present example is able to be used to specify the driver of the mobile object. At this time, the authentication target object is the mobile object, and the authentication target person is the driver of the mobile object, and the authentication device 200 is, for example, an onboard apparatus (for example, a drive recorder) arranged in the mobile object.

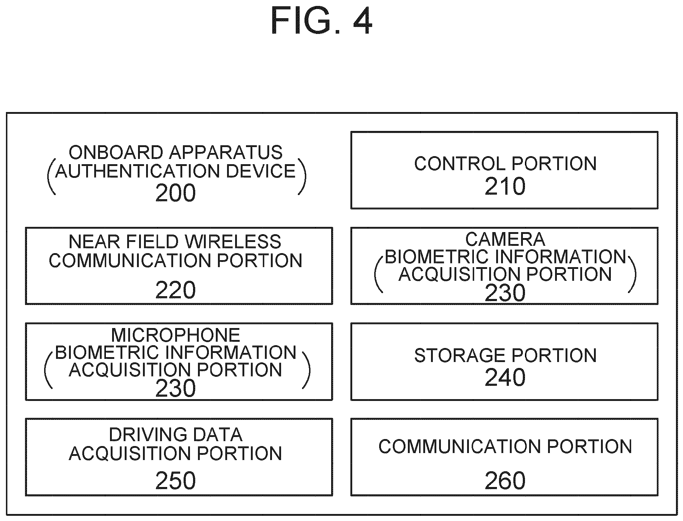

At this time, it is preferable to make the onboard apparatus (the authentication device 200), as shown in Fig. 4, to include a camera as the biometric information acquisition portion 230. At this time, it is preferable that the camera (the biometric information acquisition portion 230), for example, is arranged at a position being able to capture the face of the person seated in the driver's seat of the mobile object, and the biometric information of the plurality of persons stored in the storage medium 100 may include the information regarding the faces of the plurality of persons. In this manner, it is possible for the onboard apparatus (authentication device 200) to acquire the biometric information (the information regarding the face) of the person seated in the driver's seat of the mobile object (that is, the driver of the mobile object), and as a result, it becomes possible to specify the identification number of the driver of the mobile object.

Also, at this time, it is preferable that the onboard apparatus (the authentication device 200), as shown in Fig. 4, includes a microphone as the biometric information acquisition portion 230. At this time, it is preferable that the microphone (the biometric information acquisition portion 230) is, for example, arranged at a position being able to pick up the voice of the person seated in the driver's seat of the mobile object, and the biometric information of the plurality of persons stored in the storage medium 100 may include the information regarding the voice of the plurality of persons. At this time, it is preferable to configure the microphone (the biometric information acquisition portion 230) as a directional microphone that is able to pick up the voice from the direction of the mouth of the person seated in the driver's seat of the mobile object. In this manner, it is possible for the onboard apparatus (the authentication device 200) to acquire the biometric information (the information regarding the voice) of the person seated in the driver's seat of the mobile object (that is, the driver of the mobile object), and as a result, it becomes possible to specify the identification number of the driver of the mobile object.

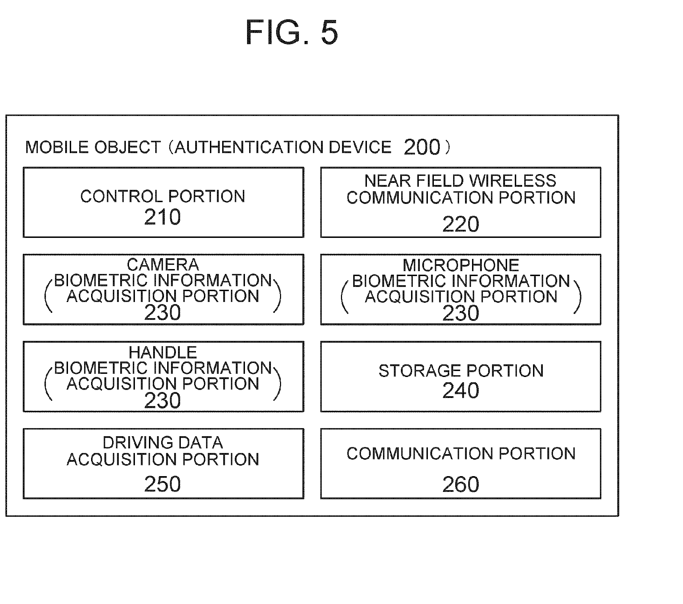

It is preferable that the authentication device 200, for example, is the mobile object itself as the authentication target object. At this time, as shown in Fig. 5, it is preferable that the mobile object (the authentication device 200) further includes a steering wheel as the biometric information acquisition portion 230. Then, it is preferrable that the steering wheel includes a finger information acquisition device acquiring the information regarding the fingers of the person holding the steering wheel (that is, the driver of the mobile object), and the biometric information of the plurality of persons stored in the storage medium 100 may include the information regarding the fingers of the plurality of persons. At this time, the finger information acquisition device includes, for example, a fingerprint sensor and an infrared sensor. In this manner, it is possible for the mobile object (the authentication device 200) to acquire the biometric information (the information regarding the fingers) of the person holding the steering wheel of the mobile object (that is, the driver of the mobile object), and as a result, it becomes possible to specify the identification number of the driver of the mobile object.

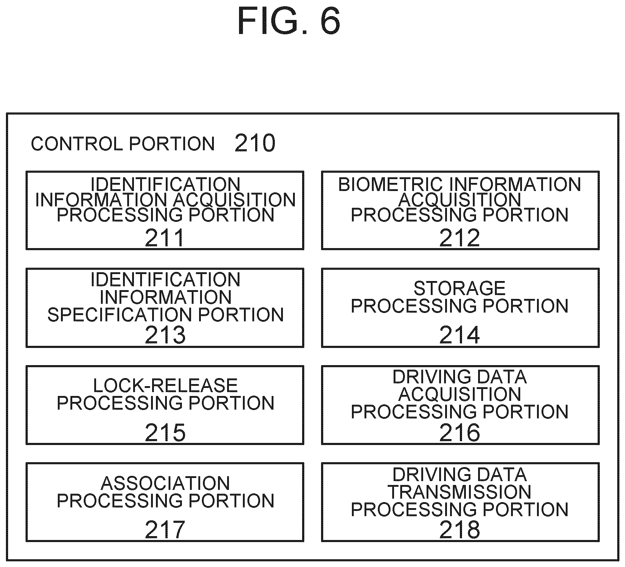

In a case in which the authentication device 200 is the onboard apparatus and the mobile object, as shown in Fig. 6, it is preferable for the control portion 210 of the authentication device 200 to further include a driving data acquisition processing portion 216 and an association processing portion 217. The driving data acquisition processing portion 216 acquires the driving data (for example, a speed and the acceleration of the mobile object, an driving image of the mobile object) of the mobile object, and the association processing portion 217 associates the driving data by the driving data acquisition processing portion 216 with the identification information specified by the identification information specification portion 213 and stores it in the storage portion 240. In this manner, it is possible to manage the driving data of the mobile object per each driver of the mobile object.

In a case in which the authentication device 200 is the onboard apparatus, it is preferable that the driving data acquisition processing portion 216 acquires the driving data from the mobile object. Also, it is preferable that the authentication device 200 further includes the driving data acquisition portion 250 as the device for acquiring the driving data (for example, a speedometer that measures the speed of the mobile object, an accelerometer that measures the acceleration of the mobile object, and a camera that captures the outside and inside of the mobile object) such that the driving data acquisition processing portion 216 may acquire the driving data by the driving data acquisition portion 250. In a case in which the authentication device 200 is the mobile object, it is preferable that the mobile object includes the driving data acquisition portion 250 such that the driving data acquisition processing portion 216 may acquire the driving data by the driving data acquisition portion 250.

It is preferable that, as shown in Fig. 4 and Fig. 5, the authentication device 200 further includes a communication portion 260, and as shown in Fig. 6, the control portion 210 of the authentication device 200 further includes a driving data transmission processing portion 218. The communication portion 260 is a communication device for performing receiving and transmitting information therebetween with the external device of the mobile object. The driving data transmission processing portion 218 transmits the driving data associated with the identification information and stored in the storage portion 240 to the external device of the mobile object using the communication by the communication portion 260. In this manner, it is possible to manage the driving data of the mobile object per each driving of the mobile object by the external device of the mobile object.

The present invention has been described above using preferred embodiments of the present invention. Although the present invention has been described herein with reference to specific examples, various modifications and changes can be made to these examples without departing from the spirit and scope of the invention as set forth in the claims.

### [REFERENCE SIGNS LIST]

- 100: storage medium
- 200: authentication device
- 210: control portion
- 211: identification information acquisition processing portion
- 212: biometric information acquisition processing portion
- 213: identification information specification portion
- 214: storage processing portion
- 215: lock-release processing portion
- 216: driving data acquisition processing portion
- 217: association processing portion
- 218: driving data transmission processing portion
- 220: near field wireless communication portion
- 230: biometric information acquisition portion
- 240: storage portion
- 250: driving data acquisition portion
- 260: communication portion

## Claims

1. An information processing device, comprising:
an identification information acquisition processing portion which acquires, from a storage medium storing identification information for identifying a plurality of persons and biometric information of the plurality of persons, the identification information and the biometric information by using a near field wireless communication;
a biometric information acquisition processing portion which acquires biometric information of a target person; and
an identification information specification portion which specifies identification information of the target person based on the biometric information of the plurality of persons acquired from the storage medium and the biometric information of the target person.

2. The information processing device according to claim 1, wherein the plurality of persons are person who use a target object.

3. The information processing device according to claim 2, wherein the target object is a mobile object, and the target person is a driver of the mobile object.

4. The information processing device according to claim 3,
wherein the biometric information acquired by the biometric information acquisition processing portion includes information regarding a face of a person seated in a driver's seat of the mobile object, and
the biometric information stored in the storage medium includes information regarding faces of the plurality of persons, respectively.

5. An onboard apparatus arranged in a mobile object, comprising:
the information processing device according to claim 4; and
a camera arranged at a position being able to capture the face of the person seated in the driver's seat of the mobile object.

6. The information processing device according to claim 3,
wherein the biometric information acquired by the biometric information acquisition processing portion includes information regarding voice of a person seated in a driver's seat of the mobile object, and
the biometric information stored in the storage medium includes information regarding voice of the plurality of persons.

7. An onboard apparatus arranged in a mobile object, comprising:
the information processing device according to claim 6; and
a microphone arranged at a position being able to pick up the voice of the person seated in a driver's seat of the mobile object.

8. The information processing device according to claim 3,
wherein the biometric information acquired by the biometric information acquisition processing portion includes information regarding fingers of a person holding a steering wheel of the mobile object, and
the biometric information stored in the storage medium includes information regarding the fingers of the plurality of persons.

9. A mobile object, comprising:
the information processing device according to claim 8; and
a steering wheel,
wherein the steering wheel includes a finger information acquisition device which acquires information regarding fingers of the person holding the steering wheel.

10. The information processing device according to any one of claims 3, 4, 6, 8, further comprising:
a driving date acquisition processing portion which acquires driving date of the mobile object; and
an association processing portion which associates the driving data acquired by the driving data acquisition processing portion with the identification information specified by the identification information specification portion.

11. The information processing device according to claim 1,
wherein the biometric information acquired by the biometric information acquisition processing portion includes information regarding a face, fingers, and/or voice of the target person, and
the biometric information stored in the storage medium includes information regarding faces, fingers, and/or voice of the plurality of persons.

12. The information processing device according to claim 1, wherein the identification information of the target person that is specified by the identification information specification portion is associated with a usage of a target object by the target person to be stored.

13. A storage medium performing near field wireless communication with an information processing device, wherein the storage medium stores identification information for identifying a plurality of persons and biometric information of the plurality of persons.

14. A system comprising a storage medium and an information processing device,
wherein the storage medium stores identification information for identifying a plurality of persons and biometric information of the plurality of persons, and
the information processing device comprises:
an identification information acquisition processing portion which acquires the identification information and the biometric information from the storage medium by using near field wireless communication;
a biometric information acquisition processing portion which acquires biometric information of a target person; and
an identification information specification portion which specifies the identification information of the target person based on the biometric information of the plurality of persons acquired from the storage medium and the biometric information of the target person.

15. An information processing method executed by a computer, comprising:
an identification information acquisition processing step of acquiring, from a storage medium storing identification information for identifying a plurality of persons and biometric information of the plurality of persons, the identification information and the biometric information by using the near field wireless communication;
a biometric information acquisition processing step of acquiring biometric information of a target person, and
an identification information specification step of specifying the identification information of the target person based on the biometric information of the plurality of persons acquired from the storage medium and the biometric information of the target person.

16. An information processing program for making a computer to execute the information processing method according to claim 15.

17. A computer-readable recording medium for storing the information processing program according to claim 16.
